# EUROPÄISCHE PATENTSCHRIFT

(11) **EP 2 735 658 B1**
(45) Veröffentlichungstag und Bekanntmachung des Hinweises auf die Patenterteilung: **10.05.2017**
(21) Anmeldenummer: 13192919.2
(22) Anmeldetag: 14.11.2013
(51) Int. Cl.: E03C 1/04, F16L 33/00

(54) **Sanitärarmatur und Fluidleitung hierfür**
Sanitary fitting and fluid conduit therefor
Robinetterie sanitaire et conduite de fluide correspondante

(30) Priorität: 27.11.2012 DE 102012221675
(43) Veröffentlichungstag der Anmeldung: 28.05.2014
(73) Patentinhaber: Hansgrohe SE, 77761 Schiltach (DE)
(72) Erfinder: King, Jürgen, 78730 Lauterbach (DE)
(74) Vertreter: Patentanwälte Ruff, Wilhelm, Beier, Dauster & Partner mbB

(56) Entgegenhaltungen:
- WO-A1-2013/034757
- DE-A1- 4 430 114
- DE-A1- 10 230 851
- DE-A1-102011 076 829
- US-A1- 2006 124 183
- US-A1- 2010 125 946

## Beschreibung

Die Erfindung bezieht sich auf eine Sanitärarmatur-Fluidleitung mit einem Verbindungsleitungsstück aus einem elastischen Kunststoffmaterial, einem ersten Anschlussnippel mit einem Leitungsaufnahmeabschnitt, auf den ein erster Endbereich des Verbindungsleitungsstücks aufgeschoben ist, und einem zweiten Anschlussnippel mit einem Leitungsaufnahmeabschnitt, auf den ein zweiter Endbereich des Verbindungsleitungsstücks aufgeschoben ist, sowie auf eine mit einer solchen Fluidleitung ausgerüstete Sanitärarmatur.

Eine derartige Fluidleitung und eine damit ausgerüstete Sanitärarmatur sind in der älteren deutschen Patentanmeldung 10 2011 076 829.7 der Anmelderin beschrieben. Die Fluidleitung in Form des mit den beiden endseitigen Anschlussnippeln versehenen Verbindungsleitungsstücks aus Kunststoff dient dort zur Wasserführung zwischen einer Ventilkartusche und einer Strahlregler-Auslassöffnung der Sanitärarmatur durch einen Auslaufhohlraum eines metallischen Gehäuses der Sanitärarmatur hindurch. Die Fluidleitung verhindert, dass das durch die Armatur hindurchgeführte Wasser mit dem metallischen, z.B. aus Messing bestehenden Armaturengehäuse in Kontakt kommt und durch diesen Kontakt unerwünschte Stoffe vom Armaturengehäuse in das zu Trinkzwecken genutzte Wasser gelangen können. Bei der dort verwendeten Fluidleitung sind die Leitungsaufnahmeabschnitte der beiden Anschlussnippel von unprofilierten Nippelrohrstücken gebildet, auf die ein jeweiliger Endbereich des Verbindungsleitungsstücks bis zu einem am Nippelrohrstück vorgesehenen radialen Anschlag aufgeschoben ist. Das Verbindungsleitungsstück kann ebenfalls unprofiliert als glattes Rohr-/Schlauchstück oder alternativ als Wellrohrstück gebildet sein, wobei sich das Wellprofil über die ganze Länge oder nur bis jeweils direkt zu den Endbereichen erstrecken kann, mit denen das Verbindungsleitungsstück auf den Leitungsaufnahmeabschnitt des zugehörigen Anschlussnippels aufgeschoben bzw. aufgesteckt ist.

In der Offenlegungsschrift WO 94/24379 A1 und in der Patentschrift US 4.979.539 sind Sanitärarmaturen offenbart, bei denen ein einteiliges Rohr-/Schlauchstück durch einen Auslaufhohlraum eines metallischen bzw. keramischen Armaturgehäuses hindurchgeführt ist, so dass ein Kontakt von durch die Sanitärarmatur hindurchgeführtem Wasser mit dem Armaturgehäusematerial vermieden wird.

Die Offenlegungsschrift US 2006/0124183 A1 offenbart eine Rohrleitung für einen Wasserhahn, die jeweils endseitig auf einen Leitungsaufnahmeabschnitt eines Anschlussnippels aufgeschoben und mittels einer Rohrhülse an diesem fixiert ist. Dazu umgibt die Rohrhülse den Endbereich des Rohrkörpers und drückt diesen radial nach innen gegen den Leitungsaufnahmeabschnitt des Anschlussnippels. Mit einem radial nach innen abkragenden, ringförmigen Endflansch greift die Rohrhülse in einen axialen Zwischenraum zwischen dem Stirnende des Rohrkörpers und einem radial abstehenden Flansch des Schlussnippels ein. Eine ähnliche Fluidleitung nebst einer diese enthaltenden Einhebel-Mischarmatur mit ausziehbarem Brausenauslauf ist in der Offenlegungsschrift US 2010/0125946 A1 offenbart.

Der Erfindung liegt als technisches Problem die Bereitstellung einer gegenüber dem oben erwähnten Stand der Technik weiter verbesserten Sanitärarmatur-Fluidleitung und einer damit ausgerüsteten Sanitärarmatur zugrunde.

Die Erfindung löst dieses Problem durch die Bereitstellung einer Sanitärarmatur-Fluidleitung mit den Merkmalen des Anspruchs 1 und einer Sanitärarmatur mit den Merkmalen des Anspruchs 8. Vorteilhafte Weiterbildungen der Erfindung sind in den Unteransprüchen angegeben.

Bei der erfindungsgemäßen Sanitärarmatur-Fluidleitung weist der Leitungsaufnahmeabschnitt wenigstens eines von zwei endseitig an ein Verbindungsleitungsstück aus einem elastischen Kunststoffmaterial angekoppelten Anschlussnippeln ein radial nach außen abstehendes Halteprofil und einen dahinter liegenden radialen Anschlag auf, und der zugehörige Endbereich des Verbindungsleitungsstücks ist unter Dehnspannung fluiddicht bis zum radialen Anschlag auf den Leitungsaufnahmeabschnitt des betreffenden Anschlussnippels aufgeschoben. Aufgrund der Dehnspannung liegt der bis zum radialen Anschlag aufgeschobene Endbereich des Verbindungsleitungsstücks mit radial nach innen weisendem Pressdruck gegen das nach außen abstehende Halteprofil des Anschlussnippels an, was zur sicheren Fluiddichtigkeit dieser Kopplung beiträgt und gegen ein axiales Lösen dieser Verbindung sichert. Hierbei ist keine Verpressung mit einer Presshülse notwendig.

In einer Weiterbildung weist das Verbindungsleitungsstück der Fluidleitung in einem Mittenbereich zwischen den beiden auf die Anschlussnippel aufgeschobenen Endbereichen ein Wellprofil auf. Dies kann die Biegefähigkeit der Leitung erhöhen und einen gewissen Längentoleranzausgleich bereitstellen. In einer weiteren Ausgestaltung endet das Wellprofil mit vorgebbarem Abstand vor den auf die Nippel aufgeschobenen Endbereichen, so dass die Kopplung von Nippel zu Verbindungsleitungsstück jeweils frei von Einflüssen durch das Wellprofil bleibt.

In einer Weiterbildung der Erfindung weist einer der beiden Anschlussnippel auf seiner dem Verbindungsleitungsstück abgewandten Seite ein abgeschrägtes Kopfende und eine zwischen diesem und dem radialen Anschlag angeordnete Ringdichtung auf, die in einer Dichtebene schräg zu einer Querebene des Nippels liegt. Mit dem so gestalteten Nippel ist die Fluidleitung in optimaler Weise an den Einsatz in einer Sanitärarmatur angepasst, in welcher die Wasserführung am Einsatzort dieses Nippels abbiegt bzw. abknickt, wie im Bereich einer Auslauföffnung eines Mischers bzw. Wasserhahns.

In einer Weiterbildung der Erfindung beträgt eine Dehnung, d.h. elastische Durchmesseraufweitung, des bzw. der auf den zugehörigen Anschlussnippel aufgeschobenen Endbereiche des Verbindungsleitungsstücks etwa 25% bis 45%, bevorzugt zwischen 33% und 37%. Dies entspricht dem Unterschied, um den das radial nach außen abstehende Halteprofil des betreffenden Anschlussnippels größer ist als der Innendurchmesser des aufgeschobenen Endbereichs des Verbindungsleitungsstücks. Mit einer Dehnung in diesem Bereich wird eine ausreichende Dehnspannung zur fluiddichten Verbindung der beiden Teile erzielt, ohne dass das Material des Verbindungsleitungsstücks überdehnt wird.

In einer Weiterbildung der Erfindung ist das Halteprofil des oder der Anschlussnippel im Längsschnitt sägezahnförmig ausgebildet, auch als Tannenbaumprofil bezeichnet. Ein solches Profil sichert besonders zuverlässig gegen axiales Lösen der Verbindung von Nippel und Leitung.

In einer Weiterbildung der Erfindung besteht wenigstens einer der beiden Anschlussnippel aus einem Material, das einen höheren Elastizitätsmodul aufweist als das Material des Verbindungsleitungsstücks. Dadurch erhält der betreffende Nippel eine gewünscht höhere Steifigkeit als das flexiblere Verbindungsleitungsstück.

Die erfindungsgemäße Sanitärarmatur ist mit einer erfindungsgemäßen Fluidleitung ausgerüstet, wozu letztere in einen Hohlraum eines Armaturengehäuses eingebracht und mit ihrem einen Anschlussnippel an einen ersten Wasseranschluss im Gehäuse und mit ihrem anderen Anschlussnippel an einen vom ersten räumlich entfernten zweiten Wasseranschluss im Gehäuse angekoppelt ist. Die Fluidleitung verbindet auf diese Weise die beiden Wasseranschlüsse in der Sanitärarmatur, ohne dass hindurchgeführtes Wasser mit dem Material des Armaturengehäuses in Kontakt kommt.

In einer Weiterbildung der erfindungsgemäßen Sanitärarmatur ist die Fluidleitung in einen Auslaufhohlraum des Armaturengehäuses eingebracht und erstreckt sich auslassseitig bis in den Bereich einer Auslauföffnung des Armaturengehäuses. Hindurchgeführtes Wasser kommt folglich nicht mit der den Auslaufhohlraum definierenden Gehäuseinnenwand in Kontakt. In weiterer Ausgestaltung erstreckt sich die Fluidleitung eintrittsseitig bis zu einem Ventilkartuschen-Aufnahmeraum im Armaturengehäuse, so dass in dem Ventilkartuschen-Aufnahmeraum bereitgestelltes Wasser über die Fluidleitung ohne Gehäusekontakt direkt bis zur Auslauföffnung der Sanitärarmatur gelangt.

Vorteilhafte Ausführungsformen der Erfindung sind in den Zeichnungen dargestellt und werden nachfolgend beschrieben. Hierbei zeigen:
- Fig. 1: eine Längsschnittansicht einer Sanitärarmatur-Fluidleitung,
- Fig. 2: eine Längsschnittansicht einer Modifikation der Fluidleitung von Fig. 1,
- Fig. 3: eine Längsschnittansicht einer weiteren Modifikation der Fluidleitung von Fig. 1 und
- Fig. 4: eine Längsschnittansicht einer Einhebelmischer-Sanitär-armatur mit einer Fluidleitung entsprechend Fig. 2.

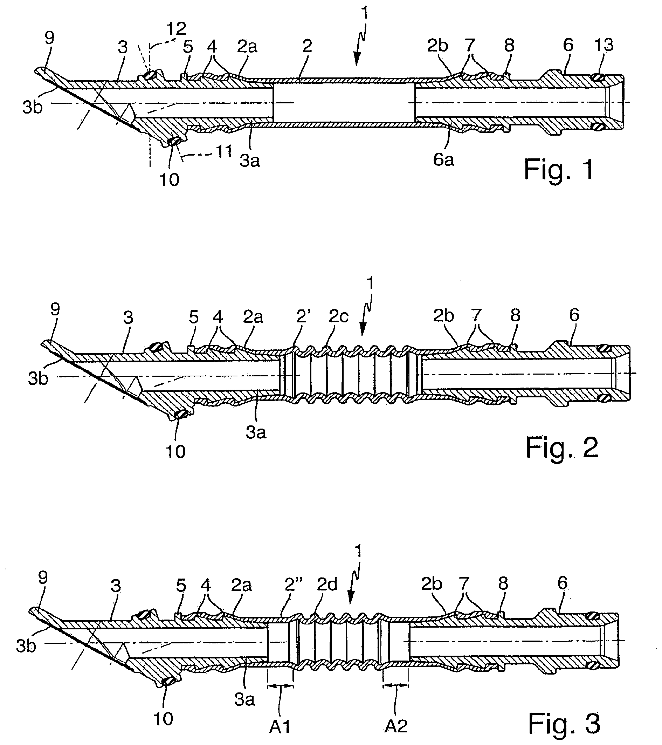

Eine in Fig. 1 im Längsschnitt dargestellte Sanitärarmatur-Fluidleitung 1 beinhaltet ein Verbindungsleitungsstück 2 aus einem elastischen Kunststoffmaterial und zwei jeweils mit einem Ende des Verbindungsleitungsstücks 2 gekoppelte Anschlussnippel 3, 6. Beide Anschlussnippel 3, 6 weisen je einen Leitungsaufnahmeabschnitt 3a, 6a auf, auf den das Verbindungsleitungsstück 2 mit einem jeweils zugehörigen Endbereich 2a, 2b unter Dehnspannung fluiddicht aufgeschoben bzw. aufgesteckt ist.

Der Leitungsaufnahmeabschnitt 3a, 6a jedes der beiden Anschlussnippel 3, 6 weist ein radial nach außen abstehendes Halteprofil 4, 7 auf, das im gezeigten Beispiel als ein im Längsschnitt sägezahnförmiges Profil bzw. Tannenbaumprofil ausgebildet ist. Die axiale Länge des Leitungsaufnahmeabschnitts 3a, 6a ist durch je einen radialen, d.h. radial nach außen abstehenden Anschlag 5, 8 begrenzt, der sich radial über den Außendurchmesser des Halteprofils 4, 7 hinaus erstreckt. Der radiale Anschlag 5, 8 befindet sich jeweils hinter dem Halteprofil 4, 7, d.h. auf der Seite des Halteprofils 4, 7, die dem im Verbindungsleitungsstück 2 aufgenommenen Nippelende entgegengesetzt ist. Der zugehörige Endbereich 2a, 2b des Verbindungsleitungsstücks 2 ist jeweils bis zu dem als entsprechende Anschlagfläche fungierenden radialen Anschlag 5, 8 auf den Leitungsaufnahmeabschnitt 3a, 6a des jeweiligen Anschlussnippels 3, 6 aufgeschoben.

Das Verbindungsleitungsstück 2 besteht aus einem gesundheitlich unbedenklichen, trinkwasserzugelassenen Material, z.B. einem HDPE(Polyethylen)-Material, wodurch die Fluidleitung ohne weiteres für trinkwasserführende Sanitärarmaturen eingesetzt werden kann. Es sind selbstverständlich auch andere trinkwasserzugelassene Kunststoffmaterialien wie z.B. PA12 etc. möglich. Im Beispiel von Fig. 1 ist das Verbindungsleitungsstück 2 als glattwandiges, unprofiliertes Leitungsstück ausgebildet. Die Anschlussnippel 3, 6 bestehen vorzugsweise aus einem Material, das einen höheren Elastizitätsmodul als das Material des Verbindungsleitungsstücks 2 besitzt, so dass das Verbindungsleitungsstück 2 in einer gewünschten Weise biegsamer ist als die Anschlussnippel 3, 6.

Durch die erwähnte Dehnspannung legen sich die auf die Leitungsaufnahmeabschnitte 3a, 6a der Anschlussnippel 3, 6 aufgeschobenen Leitungsendbereiche 2a, 2b fluiddicht unter radial nach innen wirkendem Druck gegen die Leitungsaufnahmeabschnitte 3a, 6a und insbesondere deren Halteprofil 4, 7 an. Um die Dehnspannung bereitzustellen, ist ein Innendurchmesser des Verbindungsleitungsstücks 2 in einem vorgegebenen Maß kleiner gewählt als der Außendurchmesser des Halteprofils 4, 7. Beim Aufschieben der Leitungsendbereiche 2a, 2b auf den jeweiligen Leitungsaufnahmeabschnitt 3a, 6a mit dem zugehörigen Halteprofil 4, 7 erfahren die Leitungsendbereiche folglich eine entsprechende Durchmesseraufweitung, d.h. Dehnung, welche die gewünschte Dehnspannung bewirkt. In vorteilhaften Ausführungen liegt diese Dehnung, d.h. der Unterschied zwischen Außendurchmesser des Halteprofils 4, 7 und Innendurchmesser des Leitungsendbereichs 2a, 2b vor dessen Aufweitung, in einem Bereich von 25% bis 45%, beispielsweise im Bereich zwischen 33% und 37%, in einem speziellen Fall bei ca. 35%. D.h., der jeweilige Endbereich 2a, 2b des Verbindungsleitungsstücks 2 erfährt beim Aufschieben auf den betreffenden Anschlussnippel 3, 6 eine Durchmesseraufweitung im angegebenen Prozentbereich bezogen auf seinen Durchmesser im ungedehnten Zustand.

Der erste Anschlussnippel 3 weist an seinem anderen, dem Verbindungsleitungsstück 2 abgewandten Ende eine abgeschrägtes Kopfende 3b auf, das einen Halteflansch 9 beinhaltet. Die schräge Form dieses Kopfendes 3b mit dem Halteflansch 9 ist auf einen Einbau der Fluidleitung 1 in eine Sanitärarmatur korrespondierender Gestalt abgestimmt. Für diesen beabsichtigten Einsatzzweck weist der erste Anschlussnippel 3 zudem eine Ringdichtung 10 auf, die zwischen dem Kopfende 3b und dem radialen Anschlag 5 vorgesehen ist und in einer Dichtebene 11 liegt, die schräg zu einer Querebene 12 des Nippels 3 ist. Eine weitere Ringdichtung 13 ist am anderen, zweiten Anschlussnippel 6 vorgesehen, wobei diese Ringdichtung 13 in einer Nippelquerebene liegt und im vom Verbindungsleitungsstück 2 abgewandten Endbereich dieses Anschlussnippels 6 angeordnet ist.

Die Fig. 2 und 3 zeigen Varianten der Sanitärarmatur-Fluidleitung von Fig. 1, wobei für identische oder funktionell äquivalente Elemente gleiche Bezugszeichen verwendet sind und insoweit auf die obigen Erläuterungen zu Fig. 1 verwiesen werden kann.

Im Beispiel von Fig. 2 beinhaltet die Sanitärarmatur-Fluidleitung 1 ein mit einem Wellprofil 2c versehenes und dementsprechend gegenüber dem Beispiel von Fig. 1 modifiziertes Verbindungsleitungsstück 2'. Das Wellprofil 2c erstreckt sich über einen gesamten Mittenbereich des Verbindungsleitungsstücks 2' zwischen den beiden auf die Anschlussnippel 3, 6 aufgeschobenen Endbereichen 2a, 2b. Mit anderen Worten erstreckt sich das Wellprofil 2c jeweils bis zur Höhe des im Verbindungsleitungsstück 2' aufgenommenen Endes des ersten bzw. zweiten Anschlussnippels 3, 6. Das Wellprofil 2c kann die Biegsamkeit des Verbindungsleitungsstücks 2' fördern und erlaubt einen gewissen Längentoleranzausgleich für die Fluidleitung 1 beim Einbau in eine Sanitärarmatur.

Fig. 3 zeigt eine weitere Variante der Sanitärarmatur-Fluidleitung 1 von Fig. 1 mit einem modifizierten Verbindungsleitungsstück 2". Dieses Verbindungsleitungsstück 2" weist wie das Beispiel von Fig. 2 in einem Mittenbereich zwischen den auf die Anschlussnippel 3, 6 aufgesteckten Endbereichen 2a, 2b ein Wellprofil 2d auf, das sich jedoch im Unterschied zur Variante von Fig. 2 nicht bis zu den auf die Nippel 3, 6 aufgeschobenen Endbereichen 2a, 2b bzw. den darin aufgenommenen Nippelenden erstreckt, sondern einen vorgebbaren Abstand A1, A2 von diesen einhält. In diesen beiden Abstandsbereichen A1, A2 besitzt das Leitungsstück 2" eine unprofilierte Gestalt ebenso wie in seinen Endbereichen 2a, 2b. Auf diese Weise trägt das Wellprofil 2d zu einer guten Biegefähigkeit und zu einem Längentoleranzausgleich bei, wie oben zum Ausführungsbeispiel von Fig. 2 erläutert, und andererseits beeinflusst das Wellprofil 2d nicht die Ankopplung des Leitungsstücks 2" an den jeweiligen Anschlussnippel 3, 6. Die Gestaltung des Leitungsstücks 2" mit unprofilierten Leitungsabschnitten in den auf die Anschlussnippel 3, 6 aufgeschobenen Endbereichen 2a, 2b und vorzugsweise auch in einem jeweils angrenzenden Abstandsbereich A1, A2 kann für die Verbindung des Leitungsstücks 2" mit den Anschlussnippeln 3, 6 vorteilhaft sein, während mit dem zwischen den Abstandsbereichen A1, A2 vorliegenden Wellprofil 2d die Vorteile hinsichtlich Biegsamkeit und Längentoleranzausgleich erzielt werden. Die beiden Abstandsbereiche A1, A2 können wie gezeigt von gleicher Länge sein. Alternativ können sie auch unterschiedliche Länge haben, so dass der Wellbereich nicht in der Mitte liegt. Dadurch kann die Position, an der das Verbindungsleitungsstück abknickt, in gewünschter Weise festgelegt werden.

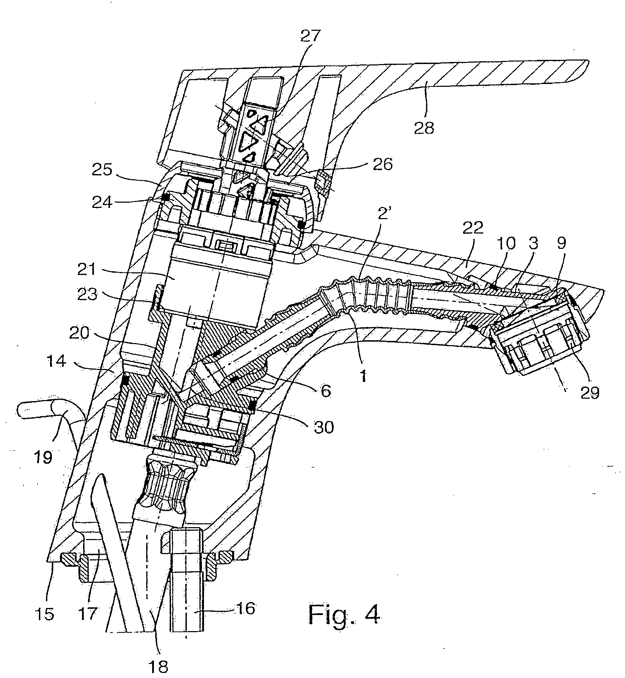

Fig. 4 zeigt eine mit der Sanitärarmatur-Fluidleitung 1 in der Realisierung von Fig. 2 ausgerüstete Sanitärarmatur in Form eines Einhebelmischers mit einem Armaturengehäuse 14. Das Armaturengehäuse 14 umfasst eine untere Standfläche 15, mit der die Armatur auf eine horizontale Unterlage aufgesetzt wird. Zur Befestigung dient ein Stehbolzen 16, der in das Armaturengehäuse 14 eingeschraubt ist. Durch eine Öffnung 17 innerhalb der Standfläche 15 sind Leitungsschläuche 18 und eine Betätigungsstange 19 herausgeführt, die durch einen nicht gezeigten Waschtisch hindurchgeführt werden können.

Im Inneren des Armaturengehäuses 14 ist ein Adapterboden 20 angeordnet, der auf einer Schulter des Gehäuses 14 ruht. Der Adapterboden 20 stellt die Verbindung zwischen den Zuleitungsschläuchen 18, einer Ventilkartusche 21 und einem Auslaufkörper 22 her. Oberhalb des Adapterbodens 20 ist ein Aufnahmeraum für die Ventilkartusche 21 gebildet. An der Oberseite 23 des Adapterbodens 20 ist die Ventilkartusche 21 angeordnet, die mittels eines Ringelements 24 axial gesichert ist. Das Ringelement 24 ist von einer Oberseite des Armaturengehäuses 14 eingeschraubt, die mit einer Abdeckung 25 versehen ist. Durch eine Öffnung 26 der Abdeckung 25 ragt ein Ventilbetätigungsschaft 27 hindurch, an dem ein Mischerhebel 28 angebracht ist, mit dem die Ventilkartusche 21 betätigt wird.

Am vorderen Ende des Auslaufkörpers 9 ist eine Auslauföffnung vorhanden, in der ein Strahlregler 29 eingeschraubt ist. Aus dem Strahlregler 29 verlässt das Wasser bei geöffnetem Mischer die Sanitärarmatur.

Im Adapterboden 20 ist eine an einen Ausgang aus der Ventilkartusche 21 angeschlossene Bohrung 30 vorhanden, deren Achse zumindest annähernd in Richtung Auslaufkörper 22 gerichtet ist. In das Ende dieser Bohrung 30 ist die Fluidleitung 1 mit dem entsprechenden Endbereich ihres zweiten Anschlussnippels 6 eingesteckt. Die Fluidleitung 1 erstreckt sich von dort durch den hohlen Auslaufkörper 22 hindurch bis zur Auslauföffnung vor dem Strahlregler 29. Dort wird sie mit dem hierzu dienenden Flansch 9 ihres ersten Anschlussnippels 3 zwischen einem Absatz an der Innenwand des Auslaufkörpers 22 und dem Strahlregler 29 fixiert. Durch die Biegsamkeit des Leitungsverbindungsstücks 2' kann die Fluidleitung 1 problemlos dem gekrümmten Verlauf des Auslaufkörpers 22 folgen. Die schräge Ringdichtung 10 liegt gegen einen korrespondierenden Dichtabschnitt an der Innenwand des Auslaufkörpers 22 fluiddicht an. Die Fluidleitung 1 führt das Wasser direkt von der Ventilkartusche 21 zum austrittsseitigen Strahlregler 29, ohne dass es mit dem metallischen Armaturengehäuse 14 z.B. im Auslaufkörper 22 in Kontakt kommt.

Es versteht sich, dass die gezeigten Sanitärarmatur-Fluidleitungen ebenso wie weitere erfindungsgemäße Sanitärarmatur-Fluidleitungen auch zum Einbau in anderen als der gezeigten Sanitärarmatur verwendet werden können. Die Erfindung umfasst folglich außer dem gezeigten Einhebelmischer auch andere Sanitärarmaturen, in die eine erfindungsgemäße Fluidleitung eingebaut ist. Dies können beispielsweise Mischer vom Typ mit mehreren Betätigungselementen, einfache Wasserhähne etc. sein. In jedem Fall kann durch den Einbau der erfindungsgemäßen Fluidleitung verhindert werden, dass das darin geführte Fluid unerwünschter weise mit anderen, z.B. metallischen bzw. aus Messing bestehenden Teilen der Sanitärarmatur in Kontakt kommt. In entsprechenden Ausführungsformen der Erfindung kann auch nur einer der beiden Anschlussnippel mit dem Halteprofil und/oder dem radialen Anschlag versehen sein.

## Patentansprüche

1. Sanitärarmatur-Fluidleitung mit
- einem Verbindungsleitungsstück (2) aus einem elastischen Kunststoffmaterial,
- einem ersten Anschlussnippel (3) mit einem Leitungsaufnahmeabschnitt (3a), auf den ein erster Endbereich (2a) des Verbindungsleitungsstücks aufgeschoben ist, und
- einem zweiten Anschlussnippel (6) mit einem Leitungsaufnahmeabschnitt (6a), auf den ein zweiter Endbereich (2b) des Verbindungsleitungsstücks aufgeschoben ist,
**dadurch gekennzeichnet, dass**
- der Leitungsaufnahmeabschnitt (3a) des ersten Anschlussnippels (3) ein radial nach außen abstehendes Halteprofil (4) und einen dahinter liegenden radialen Anschlag (5) aufweist und der erste Endbereich (2a) des Verbindungsleitungsstücks (2) unter Dehnspannung fluiddicht bis zum radialen Anschlag auf den Leitungsaufnahmeabschnitt des ersten Anschlussnippels aufgeschoben ist und/oder
- der Leitungsaufnahmeabschnitt (6a) des zweiten Anschlussnippels (6) ein radial nach außen abstehendes Halteprofil (7) und einen dahinter liegenden radialen Anschlag (8) aufweist und der zweite Endbereich (2b) des Verbindungsleitungsstücks (2) unter Dehnspannung fluiddicht bis zum radialen Anschlag auf den Leitungsaufnahmeabschnitt des zweiten Anschlussnippels aufgeschoben ist.

2. Sanitärarmatur-Fluidleitung nach Anspruch 1, weiter **dadurch gekennzeichnet, dass** das Verbindungsleitungsstück in einem Mittenbereich zwischen dem ersten und dem zweiten Endbereich ein Wellprofil (2c, 2d) aufweist.

3. Sanitärarmatur-Fluidleitung nach Anspruch 2, weiter **dadurch gekennzeichnet, dass** das Wellprofil (2d) mit einem vorgebbaren Abstand (A1, A2) vor dem ersten Anschlussnippel und/oder vor dem zweiten Anschlussnippel endet.

4. Sanitärarmatur-Fluidleitung nach einem der Ansprüche 1 bis 3, weiter **dadurch gekennzeichnet, dass** der erste Anschlussnippel auf seiner dem Verbindungsleitungsstück abgewandten Seite ein abgeschrägtes Kopfende (3b) und eine zwischen diesem und dem radialen Anschlag angeordnete Ringdichtung (10) aufweist, die in einer Dichtebene (11) schräg zu einer Nippelquerebene (12) liegt.

5. Sanitärarmatur-Fluidleitung nach einem der Ansprüche 1 bis 4, weiter **dadurch gekennzeichnet, dass** eine Dehnung des ersten, auf den Leitungsaufnahmeabschnitt des ersten Anschlussnippels aufgeschobenen Endbereichs und/oder des zweiten, auf den Leitungsaufnahmeabschnitt des zweiten Anschlussnippels aufgeschobenen Endbereichs im Bereich zwischen 25% und 45%, insbesondere im Bereich zwischen 33% und 37%, liegt.

6. Sanitärarmatur-Fluidleitung nach einem der Ansprüche 1 bis 5, weiter **dadurch gekennzeichnet, dass** das Halteprofil im Längsschnitt sägezahnförmig ausgebildet ist.

7. Sanitärarmatur-Fluidleitung nach einem der Ansprüche 1 bis 6, weiter **dadurch gekennzeichnet, dass** wenigstens einer der beiden Anschlussnippel aus einem Material besteht, das einen höheren Elastizitätsmodul aufweist als das Material des Verbindungsleitungsstücks.

8. Sanitärarmatur mit
- einem Armaturengehäuse (14) und
- einer Fluidleitung (1) nach einem der Ansprüche 1 bis 7, die in einen Hohlraum des Armaturengehäuses eingebracht ist und mit ihrem einen Anschlussnippel an einen ersten Wasseranschluss und mit ihrem anderen Anschlussnippel an einen vom ersten räumlich entfernten zweiten Wasseranschluss im Armaturengehäuse angekoppelt ist.

9. Sanitärarmatur nach Anspruch 8, weiter **dadurch gekennzeichnet, dass** die Fluidleitung in einen Auslaufhohlraum des Armaturengehäuses eingebracht ist und sich auslassseitig bis in den Bereich einer Auslauföffnung des Armaturengehäuses erstreckt.

10. Sanitärarmatur nach Anspruch 9, weiter **dadurch gekennzeichnet, dass** sich die Fluidleitung eintrittsseitig bis zu einem Ventilkartuschen-Aufnahmeraum im Armaturengehäuse erstreckt.

## Claims

1. A fluid conduit for a sanitary fitting, comprising
- a connecting conduit part (2) of an elastic plastic material,
- a first connection nipple (3) having a conduit uptake section (3a) with a first end region (2a) of the connecting conduit part slid thereon, and
- a second connection nipple (6) having a conduit uptake section (6a) with a second end region (2b) of the connecting conduit part slid thereon,
**characterized in that**
- the conduit uptake section (3a) of the first connection nipple (3) comprises a holding profile (4) radially protruding in the outward direction and a radial stop (5) arranged there behind and the first end region (2a) of the connecting conduit part (2) under tensile stress is slid onto the conduit uptake section of the first connection nipple in a fluid-tight manner up to the radial stop, and/or
- the conduit uptake section (6a) of the second connection nipple (6) comprises a holding profile (7) radially protruding in the outward direction and a radial stop (8) arranged there behind and the second end region (2b) of the connecting conduit part (2) under tensile stress is slid onto the conduit uptake section of the second connection nipple in a fluid-tight manner up to the radial stop.

2. The fluid conduit for a sanitary fitting according to claim 1, further **characterized in that** the connecting conduit part comprises a wave profile (2c, 2d) in a center region between the first and the second end region.

3. The fluid conduit for a sanitary fitting according to claim 2, further **characterized in that** the wave profile (2d) ends with a predefinable distance (A1, A2) in front of the first connection nipple and/or in front of the second connection nipple.

4. The fluid conduit for a sanitary fitting according to any of the claims 1 to 3, further **characterized in that** on the side facing away from the connecting conduit part the first connection nipple has a beveled head end (3b) and a ring sealing (10) arranged between said head end and the radial stop, said sealing being located in a sealing plane (11) inclined to a nipple transverse plane (12).

5. The fluid conduit for a sanitary fitting according to any of the claims 1 to 4, further **characterized in that** an extension of the first end region slid onto the conduit uptake section of the first connection nipple and/or of the second end region slid onto the conduit uptake section of the second connection nipple lies in the range of 25 % and 45 %, in particular in the range between 33 % and 37 %.

6. The fluid conduit for a sanitary fitting according to any of the claims 1 to 5, further **characterized in that** the holding profile is configured in a serrated way as viewed over its longitudinal section.

7. The fluid conduit for a sanitary fitting according to any of the claims 1 to 6, further **characterized in that** at least one of the two connection nipples consists of a material that has a higher modulus of elasticity than the material of the connecting conduit part.

8. A sanitary fitting comprising
- a fitting housing (14) and
- a fluid conduit (1) according to any of the claims 1 to 7 which is introduced in a cavity of the fitting housing and which is coupled to a first water connection with its first connection nipple and which is coupled to a second water connection remote from the first one in the fitting housing with its other connection nipple.

9. The sanitary fitting according to claim 8, further **characterized in that** the fluid conduit is introduced in a discharge cavity of the fitting housing and extends up to the region of a discharge opening of the fitting housing on the side of the outlet.

10. The sanitary fitting according to claim 9, further **characterized in that** the fluid conduit extends up to a valve cartridge accommodation space in the fitting housing on the side of the inlet.

## Revendications

1. Conduite de fluide pour robinetterie sanitaire comprenant
- un segment de conduite de liaison (2) constitué d'une matière plastique élastique,
- un premier raccord de connexion (3) avec une portion de réception de conduite (3a) sur laquelle est poussée une première région d'extrémité (2a) du segment de conduite de liaison, et
- un deuxième raccord de connexion (6) avec une portion de réception de conduite (6a) sur laquelle est poussée une deuxième région d'extrémité (2b) du segment de conduite de liaison,
**caractérisée en ce que**
- la portion de réception de conduite (3a) du premier raccord de connexion (3) présente un profil de retenue (4) saillant radialement vers l'extérieur et une butée radiale (5) située derrière celui-ci et la première région d'extrémité (2a) du segment de conduite de liaison (2) est poussée de manière étanche aux fluides avec une contrainte d'étirement jusqu'à la butée radiale sur la portion de réception de conduite du premier raccord de connexion et/ou
- la portion de réception de conduite (6a) du deuxième raccord de connexion (6) présente un profil de retenue (7) saillant radialement vers l'extérieur et une butée radiale (8) située derrière celui-ci et la deuxième région d'extrémité (2b) du segment de conduite de liaison (2) est poussée de manière étanche aux fluides avec une contrainte d'étirement jusqu'à la butée radiale sur la portion de réception de conduite du deuxième raccord de connexion.

2. Conduite de fluide pour robinetterie sanitaire selon la revendication 1, **caractérisée en outre en ce que** le segment de conduite de connexion présente dans une région centrale entre la première et la deuxième région d'extrémité un profil ondulé (2c, 2d).

3. Conduite de fluide pour robinetterie sanitaire selon la revendication 2, **caractérisée en outre en ce que** le profil ondulé (2d) se termine à une distance prédéfinissable (A1, A2) avant le premier raccord de connexion et/ou avant le deuxième raccord de connexion.

4. Conduite de fluide pour robinetterie sanitaire selon l'une quelconque des revendications 1 à 3, **caractérisée en outre en ce que** le premier raccord de connexion présente sur son côté opposé au segment de conduite de connexion une extrémité de tête biseautée (3b) et un joint d'étanchéité annulaire (10) disposé entre celle-ci et la butée radiale, qui est situé dans un plan d'étanchéité (11) obliquement par rapport à un plan transversal du raccord (12).

5. Conduite de fluide pour robinetterie sanitaire selon l'une quelconque des revendications 1 à 4, **caractérisée en outre en ce qu'**un étirement de la première région d'extrémité poussée sur la portion de réception de conduite du premier raccord de connexion et/ou de la deuxième région d'extrémité poussée sur la portion de réception de conduite du deuxième raccord de connexion est situé dans une plage comprise entre 25 % et 45 %, en particulier dans une plage comprise entre 33 % et 37 %.

6. Conduite de fluide pour robinetterie sanitaire selon l'une quelconque des revendications 1 à 5, **caractérisée en outre en ce que** le profil de retenue est réalisé en forme de dents de scie en coupe longitudinale.

7. Conduite de fluide pour robinetterie sanitaire selon l'une quelconque des revendications 1 à 6, **caractérisée en outre en ce qu'**au moins l'un des deux raccords de connexion se compose d'un matériau qui présente un module d'élasticité plus élevé que le matériau du segment de conduite de liaison.

8. Robinetterie sanitaire comprenant
- un boîtier de robinetterie (14) et
- une conduite de fluide (1) selon l'une quelconque des revendications 1 à 7, qui est introduite dans une cavité du boîtier de robinetterie et qui est raccordée par l'un de ses raccords de connexion à un premier raccord d'eau et par son autre raccord de connexion à un deuxième raccord d'eau éloigné spatialement du premier dans le boîtier de robinetterie.

9. Robinetterie sanitaire selon la revendication 8, **caractérisée en ce que** la conduite de fluide est introduite dans une cavité de sortie du boîtier de robinetterie et s'étend du côté de la sortie jusque dans la région d'une ouverture de sortie du boîtier de robinetterie.

10. Robinetterie sanitaire selon la revendication 9, **caractérisée en outre en ce que** la conduite de fluide s'étend du côté de l'entrée jusqu'à un espace de réception d'une cartouche de soupape dans le boîtier de robinetterie.
